# EUROPEAN PATENT APPLICATION

(11) **EP 4 439 730 A1**
(43) Date of publication of application: **02.10.2024**
(21) Application number: 22895725.4
(22) Date of filing: 21.11.2022
(51) Int. Cl.: H01M 4/587, H01M 4/36, H01M 10/054

(54) **NEGATIVE ELECTRODE ACTIVE MATERIAL FOR SECONDARY BATTERY, AND SECONDARY BATTERY USING SAME**

(30) Priority: 22.11.2021 JP 2021189254
(71) Applicant: Asahi Carbon Co., Ltd., Niigata-shi, Niigata 950-0883 (JP); National Institute of Advanced Industrial Science and Technology, Tokyo 100-8921 (JP)
(72) Inventor: ARIMITSU, Nozomi, Niigata 9500883 (JP); YAMAGUCHI, Togo, Niigata 9500883 (JP); SKAMOTO, Taichi, Tokyo 100-8921 (JP); MUKAI, Takashi, Tokyo 100-8921 (JP); TANAKA, Hideaki, Tokyo 100-8921 (JP); SENOH, Hiroshi, Tokyo 100-8921 (JP)
(74) Representative: D Young & Co LLP
(86) International application number: PCT/JP2022/043007
(87) International publication number: WO 2023/090444

(57) **Abstract**

An object of the present invention is to provide a negative electrode active material that can impart both high capacity and improved cycle characteristics to secondary batteries to a high degree and a secondary battery using the same. A negative electrode active material for a secondary battery, comprising a composite particle of a carbon black particle as an active material and a deterioration reducing material particle that reduces deterioration of active material properties of the carbon black particle by charging and discharging, wherein the deterioration reducing material particle is a particle that has a larger particle size than the carbon black particle and that does not act as an active material, and wherein the composite particle is a mixture particle of the carbon black particle and the deterioration reducing material particle.

## Description

### Technical Field

The present invention relates to a negative electrode active material for a secondary battery, and a secondary battery using the same.

### Background Art

In recent years, secondary batteries have been used over a very wide range of fields and industries, including electric vehicles and cell phones. Among such secondary batteries, lithium-ion batteries, which are the most widely used, have higher voltage and higher capacity than earlier nickel-cadmium and other batteries. However, lithium-ion batteries have an issue with the material, lithium, which is not an inexpensive and readily available element due to the geographic maldistribution of its resources. Accordingly, various alternative elements are currently being studied as a countermeasure. In particular, sodium, which has similar properties to lithium, attracts attention as an inexpensive and readily available element. However, sodium ions have a large ionic radius and are difficult to penetrate into interlayers of graphite, which is generally used as the negative electrode active material. Accordingly, further improvement is required to achieve high capacity.

Currently, the use of amorphous carbon materials, particularly hard carbon, is reported as a countermeasure, but further improvement is required, including detailed studies on their physical properties (non-patent document 1). Also, attempts have been made to improve battery properties by using specific compounds as negative electrode active materials and creating composites with carbon materials (patent documents 1 and 2). However, in these techniques, improved battery performance is limited to electrical conductivity and related charge/discharge performance, and there have been no studies of increasing capacity.

On the other hand, the present inventors have overcome certain issues by using carbon black with specific properties as the negative electrode active material (patent document 3), but have not achieved allowing free design due to depending on the properties of carbon black. In particular, when the increase in basis weight is tried to achieve higher capacity, carbon black significantly adsorbs the binder or the like because it has a larger specific surface area, that is, a smaller particle size, than conventional active materials, resulting in lower electrode strength, lower solid content, and severe shrinkage during drying. It is, therefore, difficult to use carbon black as it is in making electrodes and impossible to increase the basis weight. In addition, carbon black has a large volume fluctuation associated with charging and discharging, causing the problem of degrading cycle characteristics when the basis weight is increased. It is, accordingly, required to improve the ease of handling to increase the basis weight, thereby increasing the capacity per electrode area, and to buffer volume fluctuations when the battery is in use, thereby improving cycle characteristics.

### Prior Art Documents

### Patent Documents

Patent Document 1: Japanese Patent No. 5704143
Patent Document 2: Japanese Patent No. 5850006
Patent Document 3: Japanese unexamined Patent Application Publication No. 2019-117741

### Non-patent Documents

Non-patent Document 1: A. Kano et al., Development of Sodium Ion Batteries as Post Lithium Ion Batteries, Panasonic Technical Journal Vol. 63 No. 1 May 2017

### Summary of the Invention

### Object to be Solved by the Invention

An object of the present invention is to provide a negative electrode active material that can impart both high capacity and improved cycle characteristics to secondary batteries to a high degree and a secondary battery using the same.

### Means to Solve the Object

The present inventors started a study to solve the above issue. In pursuing the study, the present inventors have found that when carbon black is used as the negative electrode active material in sodium ion secondary batteries, the use as the negative electrode active material of a composite particle produced by granulating a mixture of carbon black with a particle that has a larger particle size than carbon black and is stable during charging and discharging without acting as an active material by itself improves cycle characteristics. This is probably because the composite of carbon black particle and a particle not involved in charging and discharging acts as a buffer to reduce the effects of volume fluctuations of carbon black to maintain the electrode structure. When the composite particle thus obtained is used as the negative electrode active material, the cycle characteristics of the secondary battery can be improved because the degradation of active material properties resulting from the volume fluctuation of carbon black can be reduced. In addition, the composite particle enables the basis weight of carbon black to be increased to increase the capacity of the secondary battery, although carbon black has been considered difficult to use in making electrodes and impossible to increase the basis weight because it has a large specific surface area (that is, smaller particle size), accordingly adsorbs the binder or the like significantly, and thus results in lower electrode strength, lower solid content, and severe shrinkage during drying. The present inventors do not know of attempts in the conventional art to achieve both high capacity and improved cycle characteristics to a high degree by granulating and combining carbon black and a material that has a larger particle size than carbon black and can form a stable framework without collapsing the structure during charging and discharging, when carbon black is used as the negative electrode active material of sodium ion secondary batteries, as in the present invention. Moreover, the negative electrode active material defined by the composite according to the present invention is a completely novel material with optimal characteristics as a negative electrode active material and produces remarkable effects that cannot be achieved in the conventional art. Also, the negative electrode active material of the present invention can be used not only in sodium ion secondary batteries but also in other secondary batteries.

Thus, the present invention is specified by the following:
(1) A negative electrode active material for a secondary battery, comprising: a composite particle of a carbon black particle as an active material and a deterioration reducing material particle that reduces deterioration of active material properties of the carbon black particle by charging and discharging, wherein the deterioration reducing material particle is a particle that has a larger particle size than the carbon black particle and that does not act as an active material, and wherein the composite particle is a mixture particle of the carbon black particle and the deterioration reducing material particle.
(2) The negative electrode active material for a secondary battery according to the above (1), wherein the composite particle contains nanofibers.
(3) The negative electrode active material for a secondary battery according to the above (1) or (2), wherein the composite particle has an average particle size in the range of 0.5 um to 30 um, and the deterioration reducing material particle has an average particle size in the range of 0.4 um to 10 um.
(4) The negative electrode active material for a secondary battery according to any one of the above (1) to (3), wherein the deterioration reducing material particle is a metal oxide particle.
(5) A secondary battery comprising a negative electrode including an active material layer containing the negative electrode active material for a secondary battery according to any one of the above (1) to (4).
(6) The secondary battery according to the above (5), wherein the secondary battery comprises sodium as a carrier.
(7) An electric apparatus using the secondary battery according to the above (5) or (6).

### Effect of the Invention

The present invention can provide a negative electrode active material that can impart both high capacity and improved cycle characteristics to secondary batteries to a high degree and a secondary battery using the same. In particular, a negative electrode active material that can impart both high capacity and improved cycle characteristics to sodium ion secondary batteries to a high degree and a sodium ion secondary battery using the same can be provided.

### Brief Description of Drawings

[Figure 1] Figure 1 is a scanning electron micrograph (secondary electron image) of composite particles obtained in Examples 1 to 4.
[Figure 2] Figure 2 is a scanning electron micrograph (backscattered electron image) of composite particles obtained in Examples 1 to 4.

### Mode of Carrying Out the Invention

The negative electrode active material for a secondary battery of the present invention is a negative electrode active material for a secondary battery comprising a composite particle of a carbon black particle as an active material and a deterioration reducing material particle that reduces deterioration of active material properties of the carbon black particle by charging and discharging, wherein the deterioration reducing material particle is a particle that has a larger particle size than the carbon black particle and that does not act as an active material, and wherein the composite particle is a mixture particle of the carbon black particle and the deterioration reducing material particle. The carbon black particle in the present invention is not limited and may be, for example, those with a nitrogen adsorption specific surface area of 5 m²/g to 2000 m²/g when measured by a method specified in JIS K6217-2: 2017. Carbon black with such a specific surface area has an average particle size of about 10 nm to 200 nm. The deterioration reducing material of the deterioration reducing material particle in the present invention is an inorganic material that does not act as an active material by itself in the range of charging and discharging voltages of the carbon black and is unlikely to undergo oxidation or reduction reactions during charging and discharging, and the deterioration reducing material particle is made of such a deterioration reducing material and has a larger particle size and a higher density than the carbon black particle. If the degradation reducing material particle undergoes an oxidation reaction or a reduction reaction during charging and discharging, the irreversible capacity increases. This is a cause of a decrease in the energy density of the battery. The deterioration reducing material particle in the present invention is not limited as long as it has such features. Examples include a metal oxide, such as aluminum oxide (Al₂O₃), titanium oxide (TiO₂), zirconium oxide (ZrO₂), silicon oxide (SiO₂), calcium oxide (CaO), magnesium oxide (MgO), cerium oxide (CeO), and yttrium oxide (Y₂O₃); a nitride, such as aluminum nitride (AlN) and boron nitride (BN); and a carbide, such as tungsten carbide (WC), silicon carbide (SiC), and boron carbide (B₄C). Preferred materials among these are chemically and physically stable and highly resistant to water and heat and have high thermal conductivity. From the viewpoint of not acting as an active material by itself in the range of charging and discharging voltages of the carbon black nor undergoing oxidation or reduction reactions during charging and discharging, of imparting high thermal conductivity to the composite particle, and of increasing the volume energy density of the active material, oxide materials are preferred. More specifically, aluminum oxide (Al₂O₃), titanium oxide (TiO₂), zirconium oxide (ZrO₂), or yttrium oxide (Y₂O₃) is preferred, particularly aluminum oxide (Al₂O₃), which is inexpensive as a material, is preferred. Aluminum oxide (Al₂O₃) can be any of α-alumina, β-alumina, β double prime-alumina, and γ-alumina. The particle size used in the present invention refers to an average particle size, and the average particle size of the deterioration reducing material particle is preferably 0.4 um to 10 um. When it is less than 0.4 um, the specific surface area of the deterioration reducing material particle is large, and a large amount of binder is required to produce an electrode with a high basis weight. When it exceeds 10 µm, its slurry is likely to settle. More preferably, it is in the range of 0.6 um to 7 um. In the present description, the expression A um to B um or in the range of A um to B um means A um or more and B um or less in either case.

The composite particle in the present invention is a mixed particle of a carbon black particle and a deterioration reducing material particle. The composite particle may contain 10% to 90% by mass of carbon black particle and 10% to 90% by mass of deterioration reducing material particle when the total of the carbon black particle and the deterioration reducing material particle is 100% by mass. Carbon black particle in a higher proportion leads to a high-capacity active material, and deterioration reducing material particle in a higher proportion increases the lifetime. Deterioration reducing material particle made of metal oxide can be an active material with higher thermal conductivity and volume energy density. The mixed particle in the present invention includes any of the following: a particle in which a carbon black particle is attached to the surface of the aggregate of deterioration reducing material particles, a particle in which a carbon black particle is present among deterioration reducing material particles in the aggregate of the deterioration reducing material particles, and a particle in which a carbon black particle is attached to the surface of the aggregate of deterioration reducing material particles and in which a carbon black particle is present among the deterioration reducing material particles in the aggregate. The composite particle in the present invention is preferably a mixed particle in which a carbon black particle is attached to the surface of the aggregate of deterioration reducing material particles and in which a carbon black particle is present among the deterioration reducing material particles in the aggregate. The average particle size of the composite particle is not limited as long as it does not negatively affect the production of the electrode slurry to coat the current collector or the like, and, for example, a range of 0.5 um to 30 um may be preferred. A composite particle having an average particle size in this range enables an electrode with a high basis weight to be manufactured using a small amount of electrode binder. The preferred range of the average particle size is 0.6 um to 20 um. The composite particle may contain a binder for granulation in addition to the carbon black particle and the deterioration reducing material particle. The binder is not limited as long as it can bind the carbon black particle and the deterioration reducing material particle to each other, and as long as it can bind the carbon black particles together and the deterioration reducing material particles together; and examples include polyvinylidene fluoride (PVdF), polytetrafluoroethylene (PTFE), polyimide (PI), polyamide, styrene-butadiene rubber (SBR), a styrene-ethylene-butylene-styrene copolymer (SEBS), polyvinyl alcohol (PVA), and an acrylic binder. The composite particle may contain other constituents, for example, an additive, such as carboxymethyl cellulose (CMC) or nanofibers. Containing the binder in the composite particle produces the effect of reducing the likelihood of powder separation in the electrode slurry, which is a mixture of a powder with a low specific gravity like carbon black and a powder with a high specific gravity like metal oxide. Composite particle containing no binder may be insufficient in mechanical strength. In this instance, the composite particle is easily crushed during the step of mixing the slurry, and a difference in specific gravity of the raw materials of the composite particle causes separation, consequently being less likely to obtain a proper slurry. The composite particle in the present invention can be used as the negative electrode active material for a secondary battery. The amount of the binder in the composite particle is preferably, but not limited to, 20% by mass or less relative to the entire composite particle. In other words, the binder is contained as needed. When the binder exceeds 20% by mass, the proportion of the active material involved in charge and discharge reactions is small, and therefore the capacity density of the electrode tends to decrease.

The composite particle in the present invention may contain nanofibers instead of or in addition to the binder. Nanofibers are a fibrous material with diameters of 1 nm to 1000 nm. Examples of the nanofibers in the present invention include, but are not limited to, polymer nanofibers made of polypropylene, polyethylene terephthalate, or the like, bionanofibers made of cellulose or the like, and carbon fibers, such as carbon nanotubes and vapor-phase-grown carbon fibers. Adding nanofibers into the composite particle enables the composite particle to maintain their structure more favorably. The nanofiber content of the composite particle is preferably 0.1% to 5% by mass relative to the total mass of the carbon black particle and the deterioration reducing material particle. The fiber diameter of the nanofibers is preferably in the range of 1 nm to 500 nm. The fiber length is preferably in the range of 0.5 um to 10 mm.

The process for producing the composite particle in the present invention is not limited. For example, the composite particle may be produced by mixing carbon black particles and deterioration reducing material particles in a liquid dispersion medium to prepare a suspension liquid, and spraying the prepared suspension liquid for granulation with a spray dryer to obtain composite granules. Examples of the dispersion medium used for preparing the suspension liquid include, but are not limited to, water, an alcohol, and an organic solvent. When the suspension liquid is prepared, a binder may be added, and examples of the binder include PVdF, PI, SBR, and an acrylic binder. Additionally, other constituents, for example, an additive, such as CMC, an alginic acid salt, or xanthan gum, may be added when the suspension liquid is prepared. Also, nanofibers may be added. The binder, additive, and nanofibers may be used individually or in combination with two or more.

The secondary battery of the present invention comprises a negative electrode including an active material layer containing the negative electrode active material for a secondary battery of the present invention. In the present invention, the active material layer of the negative electrode in the secondary battery may contain a binder and other additive constituents in addition to the negative electrode active material for a secondary battery of the present invention. Hence, the active material layer in the present disclosure refers to a mixture portion containing the active material provided on the surface of the current collector. The negative electrode in the present invention can be obtained, for example, by dispersing the negative electrode active material for a secondary battery of the present invention and a binder in a solvent to prepare an electrode slurry, applying the prepared electrode slurry onto a current collector, and drying the slurry. The current collector may be a current collector generally used in electrodes, such as aluminum foil. The binder for preparing the electrode slurry is, for example, but not limited to, polyvinylidene fluoride, polyimide, SBR, or an acrylic binder. The solvent for preparing the electrode slurry is, for example, but not limited to, N-methyl-2-pyrrolidone (NMP), acetone, or water. The secondary battery of the present invention includes structures generally included in secondary battery, such as a positive electrode, a separator, and an electrolyte layer (liquid or solid) apart from the negative electrode in the present invention. These members may be those that are generally used in secondary batteries. The secondary battery of the present invention is suitably used as a sodium ion secondary battery using sodium metal in the counter electrode.

For the structure of the secondary battery, a known form or structure, such as stacked or wound may be employed, but is not limited thereto. More specifically, a group of electrodes in which positive and negative electrodes opposing each other with a separator in between are stacked or wound and sealed in a state of being immersed in an electrolyte solution, thus defining an energy storage device. Alternatively, a group of electrodes in which positive and negative electrodes opposing each other with a solid electrolyte in between are stacked or wound and sealed, thus defining a secondary battery.

The electrolyte used in such a battery may be a liquid or solid that enables alkali metal ions to migrate from the positive electrode to the negative electrode or from the negative electrode to the positive electrode. Hence, the same electrolyte used in secondary batteries using known nonaqueous electrolytes can be used. Examples include an electrolyte solution, a gel electrolyte, a solid electrolyte, an ionic liquid, and a molten salt.

In other words, a secondary battery in the present disclosure refers to a device, an element, or the like that includes at least positive and negative electrodes and from which chemically or physicochemically stored energy can be repeatedly extracted in the form of electric power. Examples include a secondary battery using a nonaqueous electrolyte, such as a lithium ion battery, a sodium ion battery, and a potassium ion battery, and an ion capacitor using an electrode for a secondary battery. Among these, a battery using sodium, which is inexpensive and readily available, as the carrier (sodium ion batteries and sodium ion capacitors) is preferred.

Secondary batteries (particularly sodium ion batteries) using the negative electrode material of the present disclosure are free from rare metals and have high capacity. In particular, when the deterioration reducing material particle is a metal oxide, the batteries can further be superior in thermal conductivity and volume energy density. Accordingly, such a secondary battery can be utilized as electric power source in various electric apparatuses, including an air conditioner, a washing machine, a TV set, a refrigerator, a freezer, a cooling appliance, a notebook computer, a tablet computer, a smart phone, a computer keyboard, a computer display, a desktop computer, a CRT monitor, a computer rack, a printer, an integrated computer, a mouse, a hard disk, a computer peripheral, an iron, a clothes dryer, a window fan, a walkie-talky, a blower, a ventilation fan, a TV set, a music recorder, a music player, an oven, a cooking range, a toilet seat with washing function, a warm air heater, a car audio system, a car navigation system, a flashlight, a humidifier, a portable karaoke machine, a ventilation fan, a dryer, an air purifier, a cellular phone, an emergency light, a game console, a blood pressure meter, a coffee mill, a coffee maker, a kotatsu, a copy machine, a disk changer, a radio, a shaver, a juicer, a shredder, a water purifier, a lighting fixture, a dehumidifier, a dish dryer, a rice cooker, a stereophonic sound system, a heater, a speaker, a pants compressor, a vacuum cleaner, a body fat scale, a weighing machine, a bathroom scale, a movie player, an electric carpet, an electric rice cooker, a rice cooker, an electric razor, an electric stand, an electric dispensing pot, an electronic game machine, a portable game machine, an electronic dictionary, an electronic organizer, a microwave oven, an electromagnetic cooker, a calculator, an electric cart, an electric wheelchair, an electric power tool, an electric toothbrush, an electric heating pad, a haircut appliance, a telephone, a clock, an intercom, an air circulator, an electric insecticide, a copier, a hot plate, a toaster, a hair dryer, an electric drill, a water heater, a panel heater, a crusher, a soldering iron, a video camera, a videocassette recorder, a facsimile machine, a fan heater, a food processor, a futon dryer, a headphone, an electric dispensing pot, a hot carpet, a microphone, a massage machine, a bean bulb, a mixer, a sewing machine, a rice-cake making machine, a floor heating panel, a lantern, a remote control, a cooler warmer fridge, a water cooler, a freezer stocker, a cool air fan, a word processor, a whisk, a GPS, an electronic musical instrument, a motorcycle, toys, a lawn mower, a floater, a bicycle, an autobike, an automobile, a hybrid vehicle, a plug-in hybrid vehicle, an electric vehicle, a train, a ship, an airplane, a submarine, an aircraft, a satellite, and an emergency power system.

### Examples

Although the present invention will be further described specifically with reference to the following Examples and Comparative Examples, the invention is not limited by the Examples.

### [Examples 1 to 6, Comparative Examples 1 to 2]

### (Production of Composite Particles)

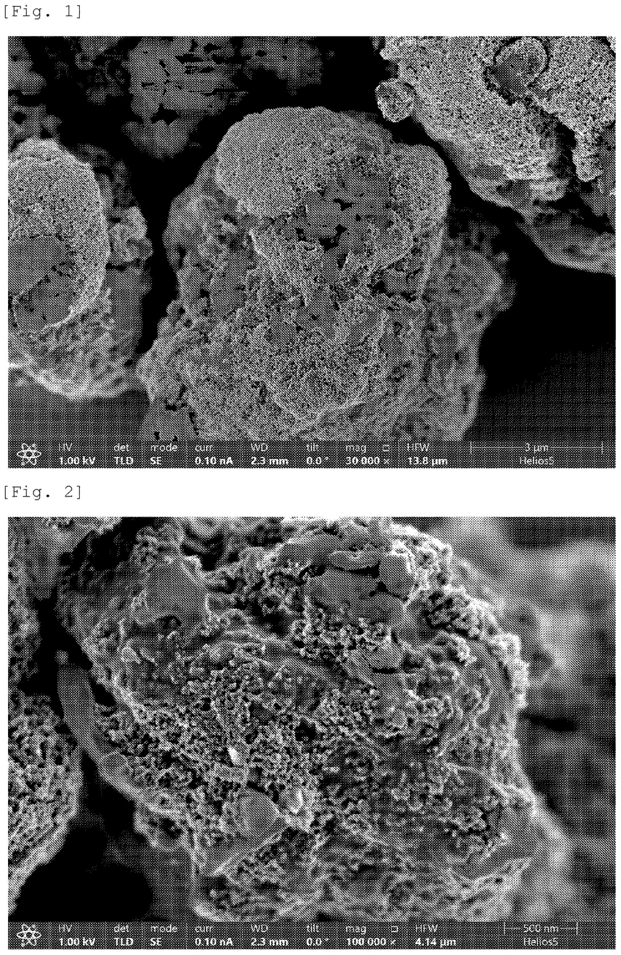

Carbon black (manufactured by Asahi Carbon Co., Ltd.), a deterioration reducing material, cellulose fibers (CeNF: 3 nm to 5 nm in fiber diameter, 2 pm to 5 um in fiber length), and a water-soluble acrylic binder as a binder were weighed at the composition ratios in Table 1 and mixed in ion exchanged water. For the deterioration reducing material, α-alumina particles with an average particle size of 1 um (low-soda alumina LS-719A, manufactured by Nippon Light Metal Company, Ltd.) were used in Examples 1 to 4 and 6, and yttrium oxide particles with an average particle size of 1.8 um (manufactured by Kanto Chemical Co., Inc.) were used in Example 5. For the carbon black, a carbon black with an oil absorption of 193 ml/100 g and a nitrogen adsorption specific surface area of 339 m²/g was used in Examples 1 to 6 and Comparative Example 1. In Comparative Example 2, 90% by mass of the carbon black and 2% by mass of a carbon black with an oil absorption of 196 ml/100 g and a nitrogen adsorption specific surface area of 53 m²/g were composed. Subsequently, the mixture was diluted with ion exchanged water so as to have a viscosity suitable for spraying, and the diluted liquid was granulated into composite particles by spray drying. Figures 1 and 2 show images obtained by observing the composite particles obtained in Examples 1 to 4 with a scanning electron microscope. The average particle sizes of the composite particles obtained were 14.7 um in Examples 1 to 4, 4.2 um in Example 5, 10.3 um in Example 6, 15.0 um in Comparative Example 1, and 26.5 pm in Comparative Example 2. The average particle size was measured with a particle size analyzer (laser diffraction / scattering particle size distribution analyzer, manufactured by HORIBA, Ltd.)

**[Table 1]**

| | **Examples 1 to 5** | **Example 6** | **Comparative Example 1** | **Comparative Example 2** |
|---|---|---|---|---|
| **Carbon black (% by mass)** | **43** | **45** | **96** | **92** |
| **Deterioration reducing material (% by mass)** | **43** | **45** | **0** | **0** |
| **CeNF (% by mass)** | **4** | **0** | **4** | **4** |
| **Binder (% by mass)** | **10** | **10** | **0** | **4** |

Secondary batteries were produced for evaluation by the following procedure, using each composite particles of Examples and Comparative Examples according to the compositions in Table 1 as the negative electrode active material.

### (Battery Production Method)

Electrodes were produced in a common method. For preparing a slurry here were used each composite particles produced in the Examples and Comparative Examples as the negative electrode active material, polyvinylidene fluoride (PVdF) or polyimide (PI) as the electrode binder, acetylene black (AB) as the electrically conducting material, and N-methyl-2-pyrrolidone as the solvent. Table 2 shows the composition proportions of each constituent when the total mass of the composite particles, the binder, and the electrically conducting material is 100%. The slurry was applied onto aluminum foil, dried, and then pressed into an electrode. Sodium metal was used as the counter electrode. The resulting electrode, the counter electrode, a glass fiber filter (GA-100, ADVANTEC), a separator (Celgard #2325, Celgard), and the electrolyte in Table 3 were combined to produce a coin cell, thus obtaining a secondary battery. In Table 3, NaPF6 represents sodium hexafluorophosphate, EC represents ethylene carbonate, DEC represents diethyl carbonate, PC represents propylene carbonate, and EMC represents ethyl methyl carbonate.

**[Table 2]**

| | Example 1 | Examples 2 to 6 | Comparative Example 1 | Comparative Example 2 |
|---|---|---|---|---|
| Composite particles (% by mass) | 88 | 78 | Failed to make electrode | 68 |
| Electrode binder (% by mass) | 10 | 20 | | 30 |
| Electrically conducting material (% by mass) | 2 | 2 | | 2 |
| Type of electrode binder | PVdF | PI | | PVdF |

The properties of the resulting secondary batteries were measured by the following method using a charge-discharge test apparatus (BLS5500, Instrument Center). The results are shown in Table 3. The basis weight in Table 3 is the mass of composite particles present on the area of a circle of 11 mm in diameter.
(1) Charging Capacity, Discharging Capacity Charging and discharging capacities were each measured at a temperature of 30°C, a rate of 0.13 mA/g, and a cut-off voltage of 0.001 V to 3.0 V.
(2) Cycle Characteristic (Capacity Retention Rate) Charge and discharge were performed 10 times, and the index of the degree of decrease from the initial battery capacity was determined (capacity retention rate = 10th discharge capacity / 1st discharge capacity × 100). The larger the capacity retention rate, the smaller the degree of decrease, which is preferable.

**[Table 3]**

| | | Example 1 | Example 2 | Example 3 | Example 4 | Example 5 | Example 6 |
|---|---|---|---|---|---|---|---|
| Basis weight (mg/ϕ11) | | 2.0 | 2.0 | 2.1 | 2.1 | 2.0 | 1.9 |
| Discharge capacity (mAh/g) | 1st | 540 | 631 | 628 | 657 | 556 | 736 |
| | 2nd | 215 | 386 | 428 | 447 | 182 | 303 |
| | 10th | 162 | 296 | 338 | 284 | 157 | 135 |
| Capacity retention rate (%) | | 30 | 47 | 54 | 43 | 28 | 18 |
| Electrolyte | | 1 M NaPF6 EC/DEC = 1/1 vol% | 1 MNaPF6 EC/DEC = 1/1 vol% | 1M NaPF6 EC/PC = 1/1 vol% | 1M NaPF6 EC/EMC = 1/1 vol% | 1M NaPF6 EC/DEC = 1/1 vol% | 1M NaPF6 EC/DEC = 1/1 vol% |

| | | Comparative Example 1 | Comparative Example 2 | | | | |
|---|---|---|---|---|---|---|---|
| Basis weight (mg/ϕ11) | | Failed to make electrode | 2.6 | | | | |
| Discharge capacity (mAh/g) | 1st | | 657 | | | | |
| | 2nd | | 201 | | | | |
| | 10th | | 16 | | | | |
| Capacity retention rate (%) | | | 2 | | | | |
| Electrolyte | | | 1 M NaPF6 EC/DEC = 1/1 vol% | | | | |

The electrode slurries prepared using the composite particles obtained in any of Examples 1 to 6 as the negative electrode active material exhibited viscosities suitable for the application, and their surface after application on the aluminum foil acting as the current collector and drying was smooth. Also, the binding strength between the aluminum foil and the active material layer was sufficiently high. In contrast, the composite particles of Comparative Example 1 caused the active material layer to separate or drop from the current collector during the step of drying the slurry, thus not resulting in producing electrodes. In Comparative Example 1, since no binder was used for granulation, probably a shear force generated in the step of kneading the slurry crushed the composite particles into fine powder, increasing the aggregation stress during the step of drying the slurry and causing the composite particles to easily separate or drop from the current collector. As is clear from the results in Table 3, the secondary batteries using any of the negative electrode active materials of the present invention exhibited superior values to the secondary battery of Comparative Example 2 in terms of both discharge capacity and cycle characteristics, thus having excellent characteristics of achieving both high capacity and cycle characteristics to a high degree.

While preferred embodiments of the present invention have been described above with reference to the drawings, various additions, modifications, or deletions may be made without departing from the spirit and scope of the invention. For example, the types and proportions of the nanofibers, the binder for granulation, or the like are not limited to the numerical values in the above embodiments. Therefore, such are also included within the scope of the invention.

### Industrial Applicability

The negative electrode active material for a secondary battery of the present invention can impart both high capacity and improved cycle characteristics to secondary batteries despite using carbon black and, accordingly, can be suitably used as the negative electrode active material for a secondary battery, particularly as the negative electrode active material of sodium ion secondary batteries. Also, the secondary battery of the present invention can have both high capacity and improved cycle characteristics and, accordingly, can be suitably used in the field using a variety of secondary batteries. The secondary battery of the present invention is suitably used as particularly a sodium ion secondary battery.

## Claims

1. A negative electrode active material for a secondary battery, comprising a composite particle of a carbon black particle as an active material and a deterioration reducing material particle that reduces deterioration of active material properties of the carbon black particle by charging and discharging,
wherein the deterioration reducing material particle is a particle that has a larger particle size than the carbon black particle and that does not act as an active material, and
wherein the composite particle is a mixture particle of the carbon black particle and the deterioration reducing material particle.

2. The negative electrode active material for a secondary battery according to claim 1, wherein the composite particle contains nanofibers.

3. The negative electrode active material for a secondary battery according to claim 1 or 2, wherein the composite particle has an average particle size in the range of 0.5 um to 30 um, and the deterioration reducing material particle has an average particle size in the range of 0.4 um to 10 µm.

4. The negative electrode active material for a secondary battery according to any one of claims 1 to 3, wherein the deterioration reducing material particle is a metal oxide particle.

5. A secondary battery comprising a negative electrode including an active material layer containing the negative electrode active material for a secondary battery according to any one of claims 1 to 4.

6. The secondary battery according to claim 5, wherein the secondary battery comprises sodium as a carrier.

7. An electric apparatus using the secondary battery according to claim 5 or 6.
